# FASCICULE DE BREVET EUROPEEN

(11) **EP 4 153 488 B1**
(45) Date de publication et mention de la délivrance du brevet: **29.07.2026**
(21) Numéro de dépôt: 21732483.9
(22) Date de dépôt: 18.05.2021
(51) Int. Cl.: B64D 29/08, B64D 29/06, F02K 1/72

(54) **NACELLE POUR ENSEMBLE PROPULSIF À TRÈS GRAND TAUX DE DILUTION, COMPRENANT UNE STRUCTURE INTERNE AVANT AMOVIBLE ET STRUCTURELLE**
GONDEL FÜR EINE ANTRIEBSANORDNUNG MIT SEHR HOHEM NEBENSTROMVERHÄLTNIS MIT EINER ABNEHMBAREN UND STRUKTURELLEN VORDEREN INNENSTRUKTUR
NACELLE FOR A PROPULSION ASSEMBLY WITH A VERY HIGH BYPASS RATIO, COMPRISING A REMOVABLE AND STRUCTURAL FRONT INTERNAL STRUCTURE

(30) Priorité: 20.05.2020 FR 2005229
(43) Date de publication de la demande: 29.03.2023
(73) Titulaire: Safran Nacelles, 76700 Gonfreville-l'Orcher (FR)
(72) Inventeur: BOILEAU, Patrick, André, 77550 MOISSY-CRAMAYEL (FR); JORET, Jean-Philippe, 77550 MOISSY-CRAMAYEL (FR); PEYRON, Vincent, Jean-François, 77550 MOISSY-CRAMAYEL (FR); FERRIER, Gina, 77550 MOISSY-CRAMAYEL (FR)
(74) Mandataire: Santarelli
(86) Numéro de dépôt international: PCT/FR2021/050873
(87) Numéro de publication internationale: WO 2021/234279

(56) Documents cités:
- EP-A1- 1 553 263
- EP-A1- 1 902 952
- FR-A1- 2 039 393
- US-A1- 2015 308 291

## Description

### Domaine technique

L'invention se rapporte au domaine des nacelles pour ensemble propulsif d'aéronef à double flux et concerne plus spécifiquement une structure de carénage interne d'une telle nacelle.

L'invention présente un intérêt particulier pour les architectures d'ensemble propulsif à très grand taux de dilution (« *Ultra High Bypass Ratio* » en anglais), c'est-à-dire présentant un rapport entre le débit du flux secondaire et celui du flux primaire pouvant atteindre ou dépasser 15.

### État de la technique antérieure

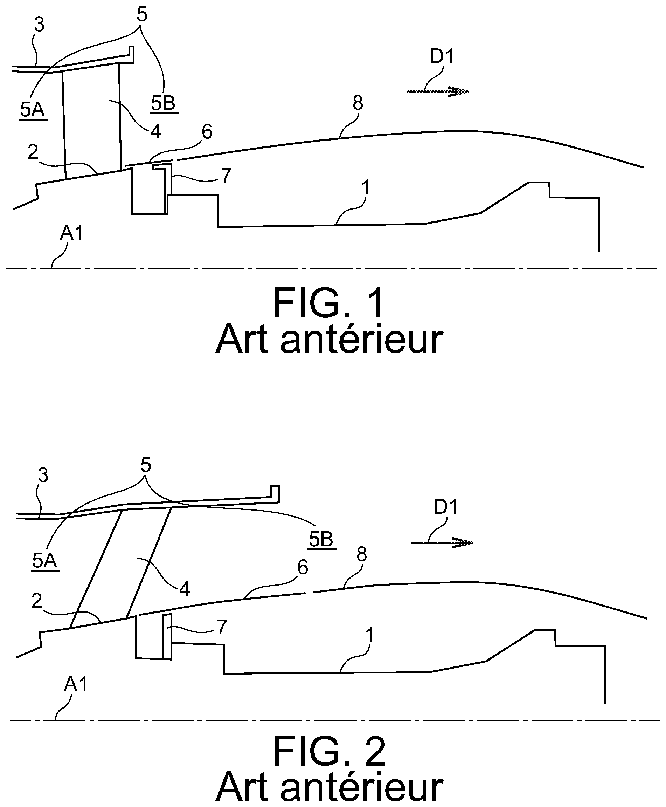

En référence à la figure 1, un ensemble propulsif à double flux conventionnel comprend un générateur de gaz 1 s'étendant autour d'un axe central longitudinal A1. Relativement à un sens D1 d'écoulement d'air et de gaz au sein de l'ensemble propulsif, ce dernier comprend à l'avant un moyeu 2 solidaire du générateur de gaz 1, un carter externe 3 de soufflante concentrique au moyeu 2 et des bras radiaux 4 reliant le moyeu 2 et le carter externe 3 l'un à l'autre. Le moyeu 2 et le carter externe 3 définissent radialement entre eux une première partie 5A d'un canal annulaire 5, dénommé « veine secondaire », destiné à acheminer un flux d'air froid, appelé « flux secondaire », vers l'arrière de l'ensemble propulsif.

Le générateur de gaz 1 est caréné par une structure interne avant 6, qui comporte typiquement des panneaux vissés sur un carter interne 7 et/ou sur le moyeu 2, et par une structure interne arrière 8 connue sous la dénomination « structure interne fixe ». En position de vol, la structure interne avant 6 et la structure interne arrière 8 délimitent radialement vers l'intérieur une portion longitudinale respective d'une deuxième partie 5B du canal annulaire 5.

La structure interne arrière 8 est typiquement réalisée sous forme de deux demi-parties susceptibles d'être ouvertes en « papillon », c'est-à-dire d'être déplacées chacune autour d'un axe de pivot respectif sensiblement parallèle à l'axe central longitudinal A1, afin de permettre à un opérateur de maintenance d'accéder à la partie du générateur de gaz 1 ainsi découverte.

Par convention, l'ensemble propulsif de la figure 1 comprend d'une part une turbomachine, ou moteur, qui inclut le générateur de gaz 1, le moyeu 2, le carter externe 3, les bras radiaux 4 et la structure interne avant 6 et, d'autre part, une nacelle comprenant la structure interne arrière 8.

Les panneaux de la structure interne avant 6 sont généralement démontés uniquement en cas de dépose du moteur, c'est-à-dire lorsque le moteur est désolidarisé de la nacelle.

Pour augmenter le taux de dilution d'un tel ensemble propulsif et pouvoir atteindre ou dépasser un taux de dilution proche de 15, il est actuellement développé des architectures telles que celle illustrée à la figure 2. Par comparaison avec la figure 1, le carter externe 3 est allongé vers l'arrière, la structure interne arrière 8 est raccourcie pour permettre son ouverture en papillon sans que son extrémité avant ne butte sur le carter externe 3, et la structure interne avant 6 est proportionnellement allongée vers l'arrière.

Dans une telle architecture à très grand taux de dilution, les dimensions de la structure interne avant 6 nécessitent que celle-ci soit supportée par des éléments de support suffisamment robustes. D'autant que des charges importantes sont susceptibles de transiter via cette structure interne avant 6, notamment lorsque la nacelle comprend un inverseur de poussée ayant des volets d'obturation qui se déploient dans le canal annulaire 5 sous l'action de bielles reliées à la structure interne avant 6, ou reliées à des éléments solidaires de cette structure interne avant 6.

De tels éléments de support, qui sont généralement formés par des pièces fixées à demeure sur le moteur, sont susceptibles d'entraver l'accès au moteur lorsque la structure interne avant 6 est démontée.

En outre, de telles dimensions de la telle structure interne avant 6 ont pour conséquence que son démontage peut s'avérer nécessaire lors d'opérations de maintenance ordinaires, sans dépose du moteur, de nombreux équipements du moteur pouvant d'ailleurs être placés en arrière du carter interne 7, sous la structure interne avant 6.

Compte tenu de la géométrie typique des éléments de support et des dimensions d'une telle structure interne avant 6, cette dernière est généralement fixée aux éléments de support avec un grand nombre de vis.

Il en résulte une durée de démontage de la structure interne avant 6 qui n'est pas admissible au regard de la durée généralement disponible pour réaliser certaines opérations de maintenance courantes.

D'autres ensembles propulsifs sont connus des documents EP 1 902 952 A1 et FR 2 039 393 A1.

### Exposé de l'invention

Un but de l'invention est de procurer une nacelle permettant de faciliter l'accès au moteur et à ses équipements en vue de leur maintenance, en particulier mais non exclusivement pour un ensemble propulsif dans lequel le carter externe de soufflante se prolonge en porte-à-faux vers l'arrière de la manière illustrée à la figure 2.

Un autre but de l'invention est de procurer une nacelle ayant une structure interne avant assurant une fonction structurelle, par exemple afin de supporter des charges résultant de l'actionnement d'un inverseur de poussée.

L'invention vise plus généralement à procurer une nacelle permettant de remédier aux inconvénients liés aux nouvelles architectures d'ensemble propulsif à très grand taux de dilution et dont la nacelle intègre ou non un inverseur de poussée présentant toute architecture conventionnelle, par exemple à grilles fixes ou mobiles et/ou à capotage extérieur monobloc coulissant (architecture en « O »), à capotage extérieur en deux demi-parties s'ouvrant en papillon solidairement avec deux demi-parties respectives de la structure interne fixe (architecture en « D »), ou à capotage extérieur en deux demi-parties s'ouvrant en papillon indépendamment de la structure interne fixe (architecture en « C »).

A cet effet, l'invention a pour objet une nacelle pour ensemble propulsif d'aéronef à double flux, cette nacelle comprenant une structure externe et une structure interne arrière s'étendant autour d'un axe central longitudinal, ladite structure interne arrière étant réalisée en deux demi-parties symétriques par rapport à un plan longitudinal médian passant par ledit axe central longitudinal et passant par un mât dudit ensemble propulsif, chacune desdites demi-parties de ladite structure interne arrière comprenant une extrémité circonférentielle reliée au niveau dudit mât dudit ensemble propulsif selon une liaison pivot ménagée autour d'un axe de pivot respectif sensiblement parallèle audit axe central longitudinal, ladite structure interne arrière étant mobile entre :
- une position de vol dans laquelle elle délimite radialement vers l'intérieur une première portion longitudinale d'un canal annulaire destiné à canaliser un flux secondaire au sein de l'ensemble propulsif et dans laquelle elle couvre une première portion longitudinale d'un espace interne destiné à recevoir un moteur de l'ensemble propulsif, et
- une position de maintenance dans laquelle la structure interne arrière est configurée pour découvrir au moins une partie de ladite première portion longitudinale de l'espace interne afin de permettre à un opérateur d'accéder à cet espace interne.

Selon l'invention, la nacelle comprend une structure interne avant comprenant des poutres et un ou plusieurs panneaux, les poutres s'étendant longitudinalement et étant espacées les unes des autres circonférentiellement par rapport à l'axe central longitudinal, le ou les panneaux pouvant être placés dans :
- une configuration de fermeture dans laquelle ils coopèrent avec les poutres de manière à délimiter radialement vers l'intérieur une deuxième portion longitudinale du canal annulaire et à couvrir une portion circonférentielle respective d'une deuxième portion longitudinale dudit espace interne,
- une configuration de maintenance dans laquelle ils libèrent un espace circonférentiel entre les poutres afin de permettre à un opérateur d'accéder à ladite deuxième portion longitudinale de l'espace interne.

Les poutres s'étendant longitudinalement, celles-ci permettent de supporter le ou les panneaux en configuration de fermeture de manière robuste tout en facilitant l'accès au moteur lorsque le ou les panneaux sont placés en configuration de maintenance, grâce à l'espace circonférentiel entre les poutres.

De plus, un tel agencement des poutres permet de maintenir le ou les panneaux en configuration de fermeture à l'aide d'un nombre réduit d'organes de fixation, ce qui permet de raccourcir la durée requise pour placer le ou les panneaux dans la configuration de maintenance.

La structure interne avant de cette nacelle permet ainsi de faciliter l'accès au moteur tout en assurant une fonction structurelle compatible notamment avec l'intégration d'un inverseur de poussée à grilles conventionnel.

Dans un mode de réalisation, la structure interne avant comprend une extrémité arrière configurée pour coopérer avec une extrémité avant de la structure interne arrière lorsque la structure interne avant est en configuration de fermeture et que la structure interne arrière est en position de vol.

De préférence, ladite extrémité arrière de la structure interne avant peut être formée par une ou plusieurs desdites poutres.

Dans un mode de réalisation, l'extrémité arrière de la structure interne avant coopère avec l'extrémité avant de la structure interne arrière de manière à transmettre des efforts axiaux de la structure interne arrière vers la structure interne avant.

Dans un mode de réalisation, les poutres de la structure interne avant sont configurées pour être reliées à un bâti du moteur, de préférence par une extrémité avant de ces poutres.

A titre d'exemple, le bâti auquel sont reliées les poutres dans ce mode de réalisation peut être un moyeu arrière d'un module de soufflante du moteur.

Dans le cadre de ce mode de réalisation, la nacelle peut comprendre des bielles de soutien dont chacune est reliée en une première extrémité à une partie intermédiaire ou une partie arrière de l'une respective des poutres et dont chacune est configurée pour être reliée en une deuxième extrémité audit bâti du moteur.

De telles bielles de soutien permettent notamment de réaliser des poutres plus fines et plus légères et de mieux répartir les charges auxquelles elles sont soumises.

Selon une première variante de réalisation, au moins un desdits panneaux est relié à une ou plusieurs desdites poutres selon une liaison pivot autorisant son déplacement entre la configuration de fermeture et la configuration de maintenance.

Selon une deuxième variante de réalisation, au moins un desdits panneaux est configuré pour être relié à un bâti du moteur selon une liaison pivot autorisant son déplacement entre la configuration de fermeture et la configuration de maintenance.

Ces variantes peuvent être combinées. Par exemple, un ou plusieurs panneaux peuvent être reliés à une ou plusieurs desdites poutres selon la première variante et un ou plusieurs autres panneaux peuvent être reliés à un bâti du moteur selon la deuxième variante.

Dans un mode de réalisation, au moins un desdits panneaux est relié à la structure interne arrière selon une liaison pivot, la structure interne arrière comprenant une partie avant pourvue d'une découpe de sorte que, lorsque la structure interne arrière et en position de vol et que les panneaux sont en configuration de fermeture, ladite partie avant de la structure interne arrière forme un premier secteur circonférentiel et ledit au moins un panneau relié à la structure interne arrière forme un deuxième secteur circonférentiel, le premier et le deuxième secteur circonférentiel délimitant chacun radialement vers l'intérieur un secteur respectif de ladite deuxième portion longitudinale du canal annulaire.

Cela permet de limiter le nombre de poutres de la structure interne avant et d'alléger la nacelle.

Dans un mode de réalisation, la nacelle comprend un inverseur de poussée ayant des volets, la structure externe étant mobile entre une position avancée et une position reculée, la nacelle comprenant des bielles reliées en une première extrémité à l'une respective des poutres de la structure interne avant et en une deuxième extrémité à l'un respectif des volets de sorte que, lorsque la structure externe est déplacée de la position avancée vers la position reculée, les volets se déploient dans le canal annulaire.

L'invention a aussi pour objet un ensemble propulsif d'aéronef à double flux comprenant un moteur et une nacelle telle que définie ci-dessus.

Dans un mode de réalisation, le moteur comprend un moyeu, un carter externe et un ou plusieurs bras radiaux reliant le moyeu et le carter externe l'un à l'autre, le carter externe s'étendant longitudinalement en arrière par rapport à une partie avant de la structure interne avant de sorte que ledit canal annulaire soit, sur une partie de ladite deuxième portion longitudinale, délimité radialement vers l'intérieur par le ou les panneaux de la structure interne avant et radialement vers l'extérieur par le carter externe.

L'invention a aussi pour objet un aéronef comprenant un tel ensemble propulsif.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une demi-vue schématique partielle d'un ensemble propulsif d'aéronef de l'art antérieur, cet ensemble propulsif permettant typiquement de procurer un taux de dilution compris entre 9 et 11 ;
[Fig. 2] est une demi-vue schématique partielle d'un ensemble propulsif d'aéronef de l'art antérieur, cet ensemble propulsif permettant typiquement de procurer un taux de dilution proche de 15 ;
[Fig. 3] est une demi-vue schématique partielle d'un ensemble propulsif d'aéronef conforme à l'invention, cet ensemble propulsif comprenant une nacelle équipée d'un inverseur de poussée en « C » ;
[Fig. 4] est une vue schématique partielle en perspective d'un ensemble propulsif d'aéronef conforme à l'invention, similaire à celui de la figure 3, la nacelle comprenant une structure interne avant et une structure interne arrière, cette figure montrant la structure interne avant en configuration de fermeture et une demi-partie de la structure interne arrière en position de vol ;
[Fig. 5] est une vue schématique partielle en perspective de l'ensemble propulsif de la figure 4, cette figure montrant ladite demi-partie de la structure interne arrière en position de maintenance ainsi qu'une demi-partie d'une structure externe de la nacelle en position de maintenance ;
[Fig. 6] est une vue schématique en perspective d'une ossature de la structure interne avant de la figure 4 selon un premier mode de réalisation, cette ossature comprenant un premier type des poutres longitudinales fixées sur un bâti ;
[Fig. 7] est une vue schématique partielle en perspective de la structure interne avant de la figure 4, cette figure montrant un panneau de cette structure interne avant désolidarisée des poutres de cette structure interne avant ;
[Fig. 8] est une vue schématique en perspective d'une ossature de la structure interne avant selon un deuxième mode de réalisation, cette ossature comprenant des poutres longitudinales fixées sur un bâti et des bielles de reprise d'efforts circonférentiels ;
[Fig. 9] est une vue schématique d'une poutre selon un deuxième type pour une structure interne avant conforme à l'invention ;
[Fig. 10] est une vue schématique d'une poutre selon un troisième type pour une structure interne avant conforme à l'invention ;
[Fig. 11] est une vue schématique en perspective d'un panneau de la structure interne avant de la figure 4 ;
[Fig. 12] est une vue schématique d'un organe de positionnement avant du panneau de la figure 11 ;
[Fig. 13] est une vue schématique d'un organe de positionnement arrière selon un premier type pour le panneau de la figure 11 ;
[Fig. 14] est une vue schématique d'un organe de positionnement arrière selon un deuxième type pour le panneau de la figure 11 ;
[Fig. 15] est une vue schématique partielle en perspective d'une structure interne avant conforme à l'invention, cette figure montrant un organe d'arrêt selon un premier type permettant de maintenir un panneau et une poutre de cette structure interne avant radialement en appui l'un contre l'autre ;
[Fig. 16] est une vue schématique partielle en perspective d'une structure interne avant conforme à l'invention, cette figure montrant un organe d'arrêt selon un deuxième type permettant de maintenir un panneau et une poutre de cette structure interne avant radialement en appui l'un contre l'autre ;
[Fig. 17] est une vue schématique partielle d'une nacelle conforme à l'invention, cette figure montrant un premier type de mécanisme de jonction d'une structure interne avant et d'une structure interne arrière de cette nacelle ;
[Fig. 18] est une vue schématique partielle d'une nacelle conforme à l'invention, cette figure montrant un deuxième type de mécanisme de jonction d'une structure interne avant et d'une structure interne arrière de cette nacelle ;
[Fig. 19] est une vue schématique partielle en perspective d'une structure interne avant conforme à l'invention, les poutres de cette structure avant comprenant une chape d'articulation d'une bielle d'un inverseur de poussée ;
[Fig. 20] est une vue schématique partielle d'une structure interne avant conforme à l'invention, cette structure interne avant comprenant un panneau articulé sur un bâti de nacelle ;
[Fig. 21] est une vue schématique partielle en perspective d'une nacelle conforme à l'invention, la structure interne avant de cette nacelle étant logée dans une ouverture réalisée dans sa structure interne arrière ;
[Fig. 22] est une vue schématique partielle en perspective d'une nacelle conforme à l'invention, la structure interne avant étant articulée sur la structure interne arrière de cette nacelle.

### Description détaillée de modes de réalisation

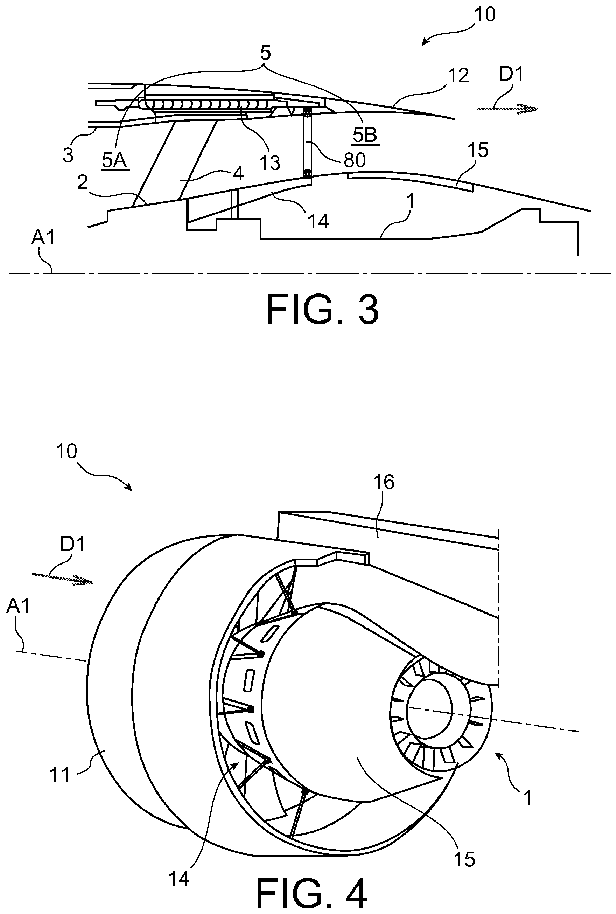

Les figures 3 et 4 montrent deux exemples analogues d'un ensemble propulsif 10 à double flux conforme à l'invention.

L'ensemble propulsif 10 comprend d'une part une nacelle et d'autre part une turbomachine, aussi appelée « moteur » dans la présente description.

Dans cet exemple, le moteur est un turboréacteur à double flux et à double corps.

Par la suite, les termes « amont », « aval », « avant » et « arrière » sont définis par rapport à un sens D1 d'écoulement d'air et de gaz à travers l'ensemble propulsif 10 lorsque celui-ci est propulsé.

Le moteur présente un axe central longitudinal A1 autour duquel s'étendent ses différents composants, en particulier à l'avant une soufflante (non représentée) et à l'arrière un générateur de gaz 1. De manière connue en soi, le générateur de gaz 1 comprend, de l'avant vers l'arrière, un compresseur basse pression, un compresseur haute pression, une chambre de combustion, une turbine haute pression et une turbine basse pression.

Lors du fonctionnement du moteur, un écoulement d'air pénètre dans l'ensemble propulsif 10 par une entrée d'air 11 située à l'avant de l'ensemble propulsif 10, traverse la soufflante (non visible) puis se divise en un flux primaire central et un flux secondaire. Le flux primaire s'écoule dans une veine principale de circulation des gaz traversant le générateur de gaz 1. Le flux secondaire s'écoule quant à lui dans un canal annulaire 5, appelé veine secondaire, qui entoure le générateur de gaz 1.

En référence à la figure 3, le moteur comprend un moyeu 2 solidaire du générateur de gaz 1 et un carter externe 3 concentrique au moyeu 2. Le carter externe 3 comprend une partie avant non représentée entourant la soufflante et une partie arrière reliée au moyeu 2 par des bras radiaux 4. Le moyeu 2 et le carter externe 3 définissent radialement entre eux une première partie 5A de la veine secondaire 5.

Dans cet exemple, le carter externe 3 se prolonge en porte-à-faux vers l'arrière par rapport au moyeu 2, le carter externe 3 s'étendant longitudinalement en arrière par rapport à une extrémité arrière du moyeu 2. Pour améliorer la tenue structurale du carter externe 3 par rapport au moyeu 2, les bras radiaux 4 sont présentent une inclinaison longitudinale.

Toujours en référence à la figure 3, la nacelle comprend une structure externe 12 abritant un inverseur de poussée 13 du type à grilles mobiles.

Cette nacelle comprend aussi une structure interne délimitant radialement vers l'intérieur une deuxième partie 5B de la veine secondaire 5, celle-ci étant délimitée radialement vers l'extérieur d'une part par une portion arrière de la virole externe 3 et d'autre part par la structure externe 12 de la nacelle.

La structure interne comprend une structure interne avant 14 et une structure interne arrière 15.

La structure interne arrière 15 est réalisée en deux demi-parties symétriques par rapport à un plan longitudinal médian passant par l'axe central longitudinal A1 et passant par un mât 16 de l'ensemble propulsif 10. Plus précisément, chaque demi-parties de la structure interne arrière 15 comprend une extrémité circonférentielle reliée au niveau du mât 16 selon une liaison pivot permettant de déplacer ces demi-parties autour d'un axe de pivot respectif sensiblement parallèle à l'axe central longitudinal A1.

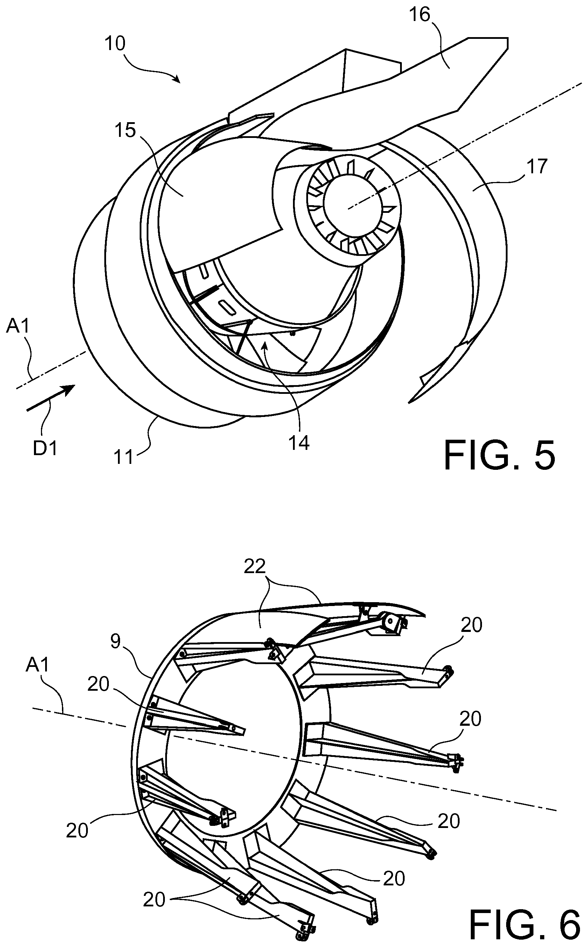

Une seule demi-partie de la structure interne arrière 15 est représentée sur les figures 4 et 5, celle-ci étant montrée à la figure 3 dans une position fermée, ou position de vol, et à la figure 4 dans une position ouverte, ou position de maintenance.

La structure interne arrière 15 est donc à ouverture conventionnelle en papillon.

Lorsque chacune des demi-parties de la structure interne arrière 15 sont en position de vol (figure 3), cette structure interne arrière 15 délimite radialement vers l'intérieur une première portion longitudinale, ou portion longitudinale arrière, de ladite deuxième partie 5B de la veine secondaire 5. La structure interne arrière 15 en position de vol délimite radialement vers l'extérieur une première portion longitudinale, ou portion longitudinale arrière, d'un espace interne dans lequel s'étend le générateur de gaz 1.

En position de maintenance (figure 4), la structure interne arrière 15 découvre au moins une partie circonférentielle de ladite portion longitudinale arrière de l'espace interne, ce qui permet à un opérateur de maintenance d'accéder à cet espace interne afin de réparer le moteur.

Dans l'exemple de la figure 5, la structure externe 12 de la nacelle comprend deux demi-panneaux 17, un seul demi-panneau 17 étant représenté sur cette figure. Les demi-panneaux 17 forment un capotage extérieur qui est mobile, indépendamment de la structure interne arrière 15, entre une position fermée (position représentée à la figure 3) et une position ouverte (non représentée). La nacelle présente donc dans cet exemple une architecture en « C » bien connue dans ce domaine.

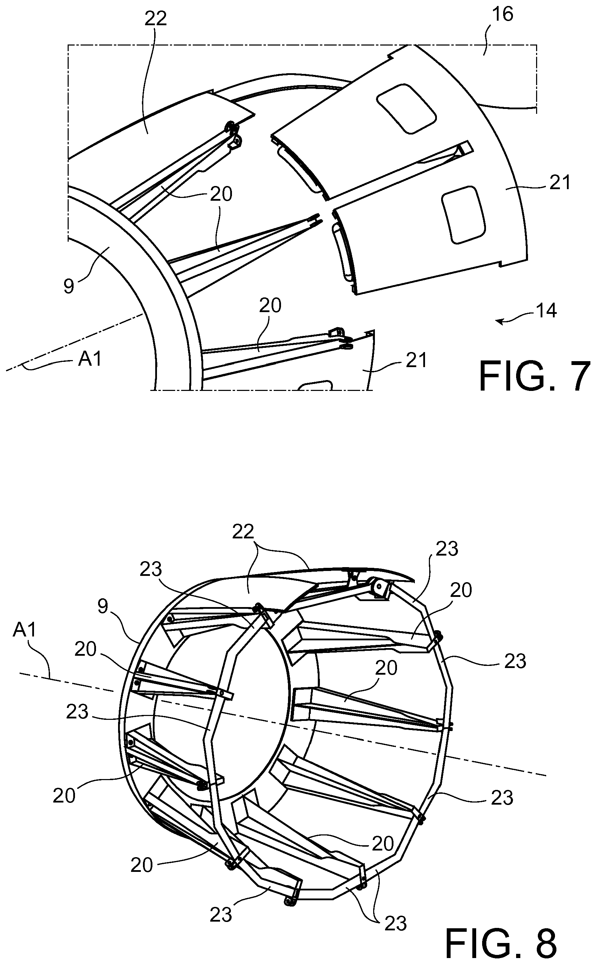

En référence aux figures 6 et 7, la structure interne avant 14 comprend des poutres 20 et des panneaux 21 et 22.

Dans ce mode de réalisation, les poutres 20 sont chacune reliées par leur extrémité avant à une partie d'un bâti 9 du moteur, qui correspond dans cet exemple à une partie arrière du moyeu 2, de sorte à être régulièrement espacées les unes des autres, circonférentiellement, autour de l'axe central longitudinal A1.

Les poutres 20 ainsi fixées s'étendent chacune longitudinalement, c'est-à-dire selon une direction sensiblement parallèle à l'axe central longitudinal A1.

Les poutres 20 forment ainsi une ossature solidaire du moteur, prévue pour supporter les panneaux 21 et 22 de la manière décrite ci-après.

La figure 8 montre une ossature qui se distingue de celle de la figure 6 en ce qu'elle comprend des bielles ou équerres 23 reliant chacune deux poutres 20 adjacentes par leur extrémité arrière. Ces équerres 23 forment dans cet exemple un organe annulaire de reprise d'efforts circonférentiels.

Dans un mode de réalisation, les équerres 23 sont assemblées aux poutres 20 à l'aide de moyens de fixation démontables (non représentés) permettant leur démontage rapide en cas d'intervention de maintenance.

Dans l'exemple des figures 6 à 8, les poutres 20 sont en porte-à-faux au sens où elles ne sont reliées au bâti 9 du moteur que par leur extrémité avant.

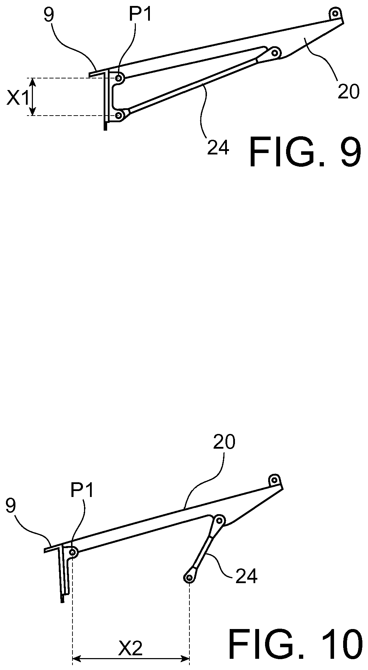

Dans un autre mode de réalisation, une ou plusieurs des poutres 20 formant l'ossature de la structure interne avant 14 peuvent être stabilisées par des bielles de soutien 24 selon les principes illustrés sur les figures 9 et 10.

Dans l'exemple de la figure 9, la bielle de soutien 24 de l'unique poutre 20 représentée sur cette figure est reliée en l'une de ses extrémités à une partie arrière de cette poutre 20 et est reliée en son autre extrémité au bâti 9 du moteur, à une distance radiale X1 non nulle du point de fixation P1 de la poutre 20 à ce même bâti 9.

Dans l'exemple de la figure 10, la bielle de soutien 24 de l'unique poutre 20 représentée sur cette figure est également reliée en l'une de ses extrémités à une partie arrière de cette poutre 20. Contrairement à l'exemple de la figure 9, la bielle de soutien 24 est dimensionnée pour être reliée en son autre extrémité à une partie du moteur située à une distance longitudinale X2 non nulle du point de fixation P1.

Le choix de l'utilisation d'une telle bielle de soutien 24 et des distances radiale X1 ou longitudinale X2 correspondantes dépend notamment de l'espace disponible.

En référence aux figures 6 et 7, les panneaux 22 sont dans cet exemple destinés à s'étendre de part et d'autre du mât 16 de l'ensemble propulsif 10 et sont fixés par exemple à l'aide de vis à des poutres 20 situées circonférentiellement au niveau du mât 16.

Les panneaux 21 sont quant à eux amovibles, démontables ou escamotables selon les principes décrits ci-après.

En effet, les panneaux 21 sont prévus pour pouvoir être déplacés entre une configuration dite de fermeture dans laquelle ils coopèrent avec les poutres 20, tel le panneau 21 partiellement représenté en bas sur la figure 7, et une configuration dite de maintenance dans laquelle ils libèrent un espace circonférentiel entre les poutres 20, tel le panneau 21 représenté en haut sur la figure 7.

Sur les figures 4 et 5, la structure interne avant 14 est représentée dans une configuration dans laquelle les panneaux de cette structure, similaires aux panneaux 21 de la figure 7, sont en configuration de fermeture.

En configuration de fermeture, les panneaux 21 coopèrent avec les poutres 20 de manière à délimiter radialement vers l'intérieur une deuxième portion longitudinale, ou portion longitudinale avant, de ladite deuxième partie 5B de la veine secondaire 5.

Les panneaux 21 en configuration de fermeture couvrent simultanément une portion circonférentielle respective d'une deuxième portion longitudinale, ou portion longitudinale avant, dudit espace interne dans lequel s'étend le générateur de gaz 1.

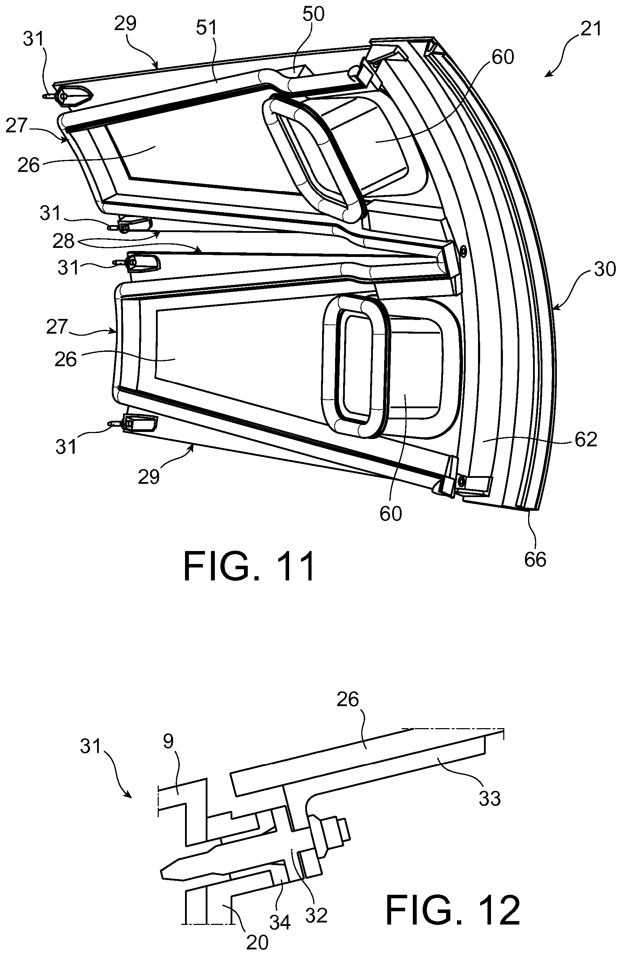

La figure 11 montre un panneau 21 de la structure interne avant 14.

Ce panneau 21 comprend deux secteurs 26 s'étendant longitudinalement et présentant chacun une extrémité avant 27, une extrémité latérale interne 28 et une extrémité latérale externe 29.

Le panneau 21 comprend une extrémité arrière 30 au niveau de laquelle les deux secteurs 26 sont reliés l'un à l'autre.

Les extrémités latérales internes 28 des deux secteurs 26 sont en regard l'une de l'autre de manière à définir une ouverture longitudinale.

En référence aux figures 4, 7 et 11, cet agencement du panneau 21 lui permet d'être placé sur l'ossature formée par les poutres 20 de sorte que ladite ouverture longitudinale soit située circonférentiellement au niveau de l'une des poutres 20 dite poutre de référence et de sorte que l'extrémité latérale externe 29 de chacun des secteurs 26 soit en regard :
- soit d'une extrémité latérale externe 29 d'un autre panneau 21 adjacent de manière à définir avec celle-ci une ouverture longitudinale située circonférentiellement au niveau d'une autre poutre 20 adjacente à la poutre 20 de référence,
- soit d'une extrémité latérale de l'un des panneaux fixes 22 de manière à définir avec celle-ci une ouverture longitudinale située circonférentiellement au niveau d'une autre poutre 20 adjacente à la poutre 20 de référence.

La structure interne avant 14 peut comprendre un ou plusieurs panneaux 21 du type illustré à la figure 11 et/ou un ou plusieurs panneaux d'un autre type, comprenant par exemple un seul secteur 26 ou trois ou plus de secteurs 26.

Dans l'exemple de la figure 6, l'ossature de la structure interne avant 14 comprend dix poutres 20, deux d'entre elles étant prévues pour être positionnées de part et d'autre du mât 16 de l'ensemble propulsif 10, les panneaux 22 fixes s'étendant circonférentiellement depuis ces poutres vers le mât 16. Ainsi, cette ossature peut par exemple recevoir trois panneaux ayant deux secteurs 26 tels que le panneau 21 de la figure 11 et un panneau (non représenté) ayant trois secteurs 26, ou encore quatre panneaux ayant deux secteurs 26 tels que le panneau 21 de la figure 11 et un panneau (non représenté) ayant un unique secteur 26.

La description qui suit concerne un unique panneau 21 tel celui de la figure 11 et s'applique par analogie à tout autre panneau présentant par exemple un nombre de secteurs 26 différent.

Pour maintenir le panneau 21 sur l'ossature de la structure interne avant 14, il est prévu dans cet exemple de mettre en œuvre un ou plusieurs organes de positionnement avant de ce panneau 21.

La figure 12 montre un organe de positionnement avant 31 qui comprend une partie mâle et une partie femelle. La partie mâle comporte un pion 32 solidaire d'une ferrure 33. La partie femelle comporte une bague 34 définissant un logement configuré pour recevoir une partie du pion 32.

Dans l'exemple de la figure 11, il est fixé au niveau de l'extrémité avant de chacun des secteurs 26 du panneau 21 les parties mâles de deux organes de positionnement avant 31.

Les parties femelles correspondantes sont dans l'exemple de la figure 6 solidaires des poutres 20. Dans cet exemple, chaque poutre 20 porte en son extrémité avant deux bagues 34 de sorte que, lorsque le panneau 21 est placé en configuration de fermeture sur l'ossature, chacun des pions 32 est reçu dans le logement d'une bague 34 respective.

Dans un mode de réalisation non représenté, le logement de la partie femelle de l'organe 31 est réalisé directement dans la poutre 20 et/ou dans le bâti 9 du moteur.

Dans cet exemple, la structure interne avant 14 comprend aussi des organes de positionnement arrière du panneau 21.

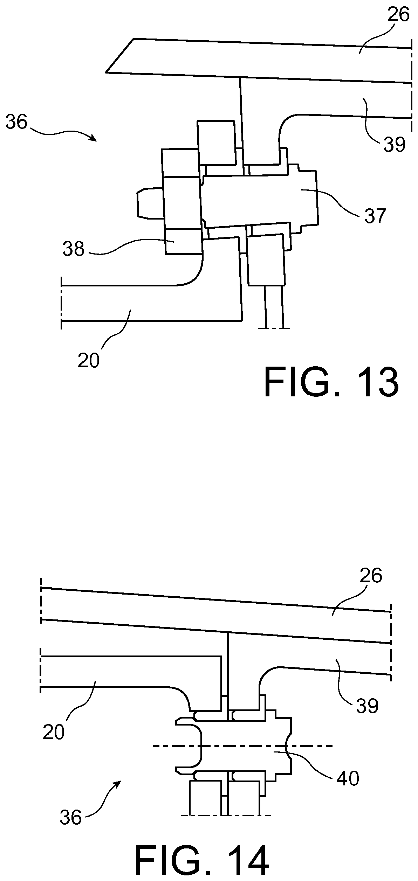

La figure 13 montre un organe de positionnement arrière 36 comprenant une vis 37 et un écrou 38 prévus pour maintenir l'une contre l'autre, selon une direction sensiblement longitudinale, le panneau 21 et une poutre 20.

Pour ce faire, l'organe de positionnement arrière 36 comprend une ferrure 39 fixée à proximité de l'extrémité arrière 30 du panneau 21 et comprend un orifice apte à être traversé par la vis 37. Dans cet exemple, chaque poutre 20 de la structure interne avant 14 comprend en son extrémité arrière au moins un orifice apte à être traversé par la vis 37. La structure interne avant 14 est configurée de sorte que, lorsque le panneau 21 est en configuration de fermeture, la vis 37 puisse être insérée au travers de l'orifice réalisé dans la ferrure 39 et de l'orifice réalisé dans une poutre 20 correspondante, puis assemblée avec l'écrou 38 de la manière illustrée à la figure 13.

Dans l'exemple de la figure 11, le panneau 21 comprend de préférence au moins trois organes de positionnement arrière 36 de ce type, deux positionnés au niveau des extrémités latérales externes 29 et un autre positionné circonférentiellement au milieu du panneau 21, c'est-à-dire à équidistance de ses extrémités latérales externes 29.

La figure 14 montre un autre exemple d'un organe de positionnement arrière 36 qui se distingue de celui de la figure 13 en ce que la vis 37 et l'écrou 38 sont remplacés par un pion 40 axialement solidaire de la ferrure 39 et dont l'extrémité reçue dans l'orifice de la poutre 20 est élastiquement déformable de manière à nécessiter un effort prédéterminé pour engager le pion 40 dans cet orifice ou l'en retirer.

Les organes de positionnement avant 31 et arrière 36 sont dans ces exemples à montage axial, les pions 32 et 40 et la vis 37 s'étendant selon une direction sensiblement parallèle à l'axe central longitudinal A1 lorsque le panneau 21 est en configuration de fermeture. Dans un autre mode de réalisation non représenté, les organes de positionnement avant 31 et arrière 36, ou une partie d'entre eux, sont à montage radial.

De tels organes de positionnement avant 31 et arrière 36 améliorent le maintien en position du panneau 21 en configuration de fermeture, réduisant ainsi les perturbations aérodynamiques.

De tels organes de positionnement avant 31 et arrière 36 permettent aussi de faciliter et d'accélérer le montage et le démontage du panneau 21, c'est-à-dire son déplacement entre les configurations de fermeture et de maintenance.

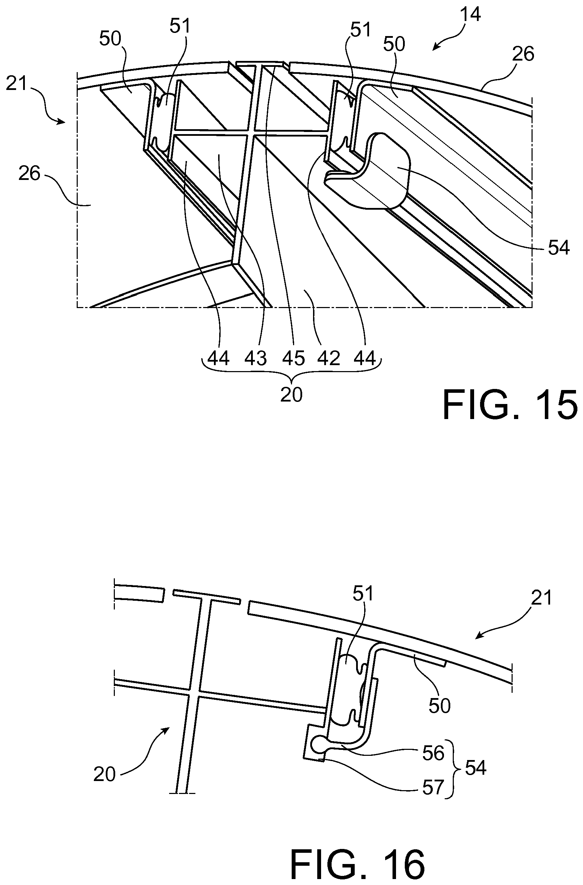

La figure 15 montre l'une des poutres 20 de la structure interne avant 14 et le panneau 21 de la figure 11 en configuration de fermeture.

Cette poutre 20 présente, dans une section transversale, une barre radiale 42 et une barre circonférentielle 43 formant une croix. Chacune des extrémités de la barre circonférentielle 43 porte un élément d'appui 44 définissant une face d'appui sensiblement parallèle à la barre radiale 42. L'extrémité radialement vers l'extérieur de la barre radiale 42 porte une nervure 45 affleurante avec le panneau 21.

Dans un autre mode de réalisation non représenté, le panneau 21 recouvre radialement vers l'extérieur la barre radiale 42, qui peut être dépourvue de nervure 45, ou plus généralement la poutre 20. Cela permet notamment de réduire les perturbations aérodynamiques. Un tel mode de réalisation est notamment compatible avec une nacelle dépourvue d'inverseur de poussée ou présentant une architecture en « D » ou en « O ».

En référence aux figures 11 et 15, chaque secteur 26 du panneau 21 comprend une ferrure 50 portant un joint d'étanchéité 51 configuré pour être en appui contre la face d'appui de deux poutres 20 de la structure interne avant 14 lorsque le panneau 21 est en configuration de fermeture.

Il est représenté à la figure 15 un organe d'arrêt 54 configuré pour améliorer le maintien en configuration de fermeture du panneau 21 relativement à cette poutre 20.

Cet organe d'arrêt 54 forme une équerre dont une partie est reliée, par exemple par soudage, à l'une des ferrures 50 du panneau 21 et une autre partie est configurée pour venir en appui radial sur l'un des éléments d'appui 44 de la poutre 20 lorsque le panneau 21 est en configuration de fermeture.

Plusieurs organes d'arrêt 54 de ce type peuvent être installés pour maintenir le panneau 21.

Dans l'exemple de la figure 15, la partie de l'organe d'arrêt 54 en appui radial sur l'un des éléments d'appui 44 de la poutre 20 forme une butée empêchant un déplacement du panneau 21 par rapport à la poutre 20 dans un premier sens de déplacement radial. Chaque secteur 26 du panneau 21 comprend par ailleurs une portion située radialement de l'autre côté de cet élément d'appui 44 empêchant ou du moins limitant le déplacement du panneau 21 par rapport à la poutre 20 dans un deuxième sens de déplacement radial. Il en résulte que, dans cet exemple, le panneau 21 doive être monté sur la poutre 20 par translation axiale, typiquement à partir d'une configuration proche de celle illustrée à la figure 7.

De manière générale, un tel organe d'arrêt 54 tend à limiter la déformation du panneau 21 sous l'action des contraintes aérodynamiques auxquelles il est soumis et permet d'éviter, le cas échéant, le désengagement du pion 32 d'un organe de positionnement 31 équipant éventuellement la structure interne avant 14.

De tels effets peuvent être obtenus à l'aide de moyens alternatifs ou complémentaires, par exemple à l'aide d'un organe d'arrêt 54 tel qu'illustré à la figure 16.

L'organe d'arrêt 54 de la figure 16 comprend un rail 56 solidaire du panneau 21 et une glissière 57 solidaire de la poutre 20. Bien entendu, dans un autre mode de réalisation non représenté, le rail 56 peut être solidaire de la poutre 20 et la glissière 57 solidaire du panneau 21.

De manière générale, le panneau 21 peut comprendre un ou plusieurs organes de positionnement avant 31 tels que celui illustré à la figure 12 et/ou un ou plusieurs organes de positionnement arrière 36 tels que ceux illustrés aux figures 13 et 14 et/ou un ou plusieurs organes d'arrêt 54 tels que ceux illustrés aux figures 15 et 16.

Ces différents organes permettent un montage et un démontage rapides du panneau 21 et peuvent être utilisés en nombre réduit tout en assurant un maintien satisfaisant du panneau 21 en configuration de fermeture.

Dans l'exemple de la figure 11, chaque secteur 26 du panneau 21 est équipé d'un organe d'aération 60 du type écope ou évent formant une interface destinée à coopérer de manière étanche avec une interface correspondante (non représentée) du moteur lorsque le panneau 21 est en configuration de fermeture.

Le panneau 21 de la figure 11 comprend par ailleurs une équerre 62 de reprise d'efforts circonférentiels s'étendant autour de l'axe central longitudinal A1 lorsque ce panneau 21 est en configuration de fermeture.

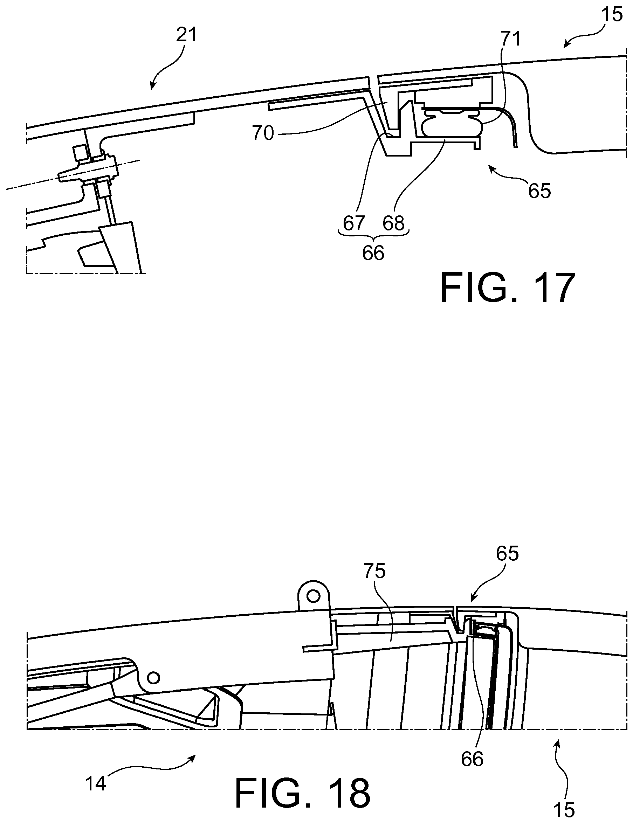

En référence à la figure 17, la nacelle comprend dans cet exemple un mécanisme de jonction 65 configuré pour relier la structure interne avant 14 et la structure interne arrière 15 lorsque celles-ci sont respectivement en configuration de fermeture et en position de vol.

En particulier, la structure interne avant 14 comprend une extrémité arrière configurée pour coopérer avec une extrémité avant de la structure interne arrière 15.

A cet effet, le mécanisme de jonction 65 comprend d'une part une pièce 66 fixée à l'extrémité arrière du panneau 21 (voir figures 11 et 17). Lorsque la structure interne avant 14 est en configuration de fermeture, cette pièce 66 forme une rainure 67 s'étendant circonférentiellement et étant ouverte radialement vers l'extérieur. La pièce 66 comprend aussi un bras d'appui 68.

Le mécanisme de jonction 65 comprend d'autre part un bras radial 70 fixé à l'extrémité avant de la structure interne arrière 15. En position de vol, le bras radial 70 coopère avec la rainure 67 de la pièce 66 de sorte que le mécanisme de jonction 65 permette de transmettre des efforts axiaux de la structure interne arrière 15 vers le panneau 21 ou plus généralement vers la structure interne avant 14.

Le mécanisme de jonction 65 comprend en outre un joint d'étanchéité 71 solidaire de la structure interne arrière 15 et configuré pour venir en appui radial contre le bras d'appui 68 de la pièce 66 lorsque la structure interne arrière 15 est en position de vol.

En référence à la figure 11, la pièce 66 du mécanisme de jonction 65 s'étend dans cet exemple depuis l'une des extrémités latérales externes 29 du panneau 21 jusqu'à l'autre extrémité latérale externe 29 de ce panneau 21.

Les dimensions du mécanisme de jonction 65, notamment la dimension circonférentielle de la pièce 66, et le nombre de mécanismes de jonction 65 peuvent être adaptés en fonction des contraintes susceptibles de transiter de la structure interne arrière 15 vers la structure interne avant 14.

Dans une variante illustrée à la figure 18, les poutres 20 comprennent une extension 75 se prolongeant vers l'arrière et portant une ou plusieurs pièces similaires à la pièce 66 décrite ci-dessus pour former un ou plusieurs mécanismes de jonction 65 reliant une ou plusieurs des poutres 20 de la structure interne avant 14 et la structure interne arrière 15 en position de vol.

Autrement dit, ladite extrémité arrière de la structure interne avant 14 coopérant avec l'extrémité avant de la structure interne arrière 15 peut être formée par une ou plusieurs des poutres 20.

Cette variante permet de faire passer les efforts axiaux directement dans les poutres 20 sans passer par les panneaux 21.

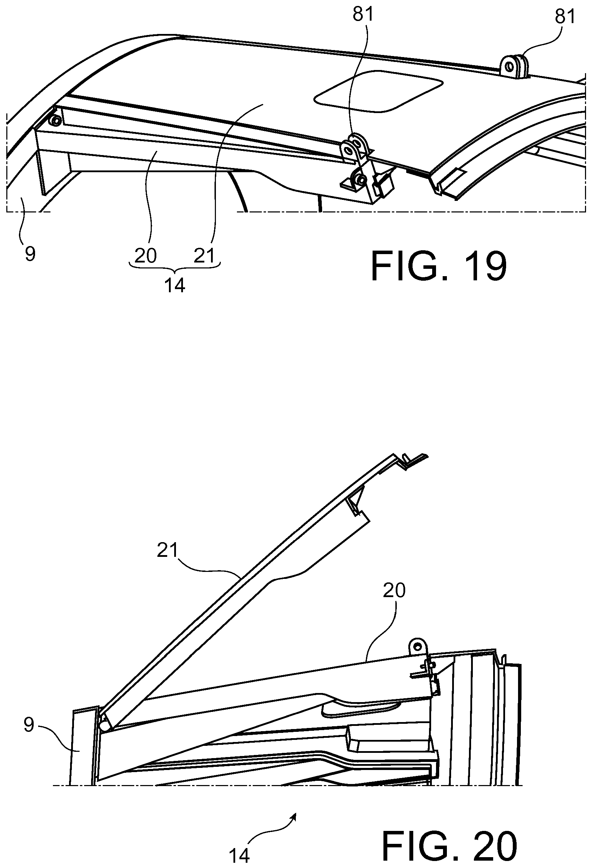

En référence aux figures 3 et 19, l'inverseur de poussée 13 comprend dans cet exemple des volets (non représentés). De manière connue en soi, ces volets sont prévus pour être déployés ou rétractés dans la veine secondaire 5 sous l'action conjuguée d'une translation axiale de la structure externe 12 et de bielles 80.

Dans cet exemple, les poutres 20 de la structure interne avant 14 comprennent chacune une chape 81 à laquelle est articlée une extrémité de l'une respective des bielles 80 de l'inverseur 13, l'autre extrémité de cette bielle 80 étant reliée de manière conventionnelle à l'un respectif des volets de cet inverseur 13.

Le mode de réalisation de la figure 19 est notamment compatible avec une nacelle présentant une architecture en « O ».

La figure 20 illustre une variante de réalisation dans laquelle les panneaux 21 de la structure interne avant 14 sont articulés en leur extrémité avant sur le bâti 9 afin de pouvoir les déplacer entre la configuration de fermeture et la configuration de maintenance par basculement.

Dans ce cas, il peut être prévu des moyens de fixation (non représentés) tels que des verrous configurés pour pouvoir verrouiller et déverrouiller rapidement les panneaux 21 sur les poutres 20, de préférence au niveau de leur extrémité arrière.

Dans les différents modes de réalisation qui précèdent, l'extrémité avant de la structure interne arrière 15 est longitudinalement située en arrière par rapport à l'extrémité arrière du carter externe 3 du moteur. Ainsi, lorsque la structure interne arrière 15 est déplacée de la position de vol à la position de maintenance, celle-ci n'entre pas en collision avec le carter externe 3 (voir figure 5).

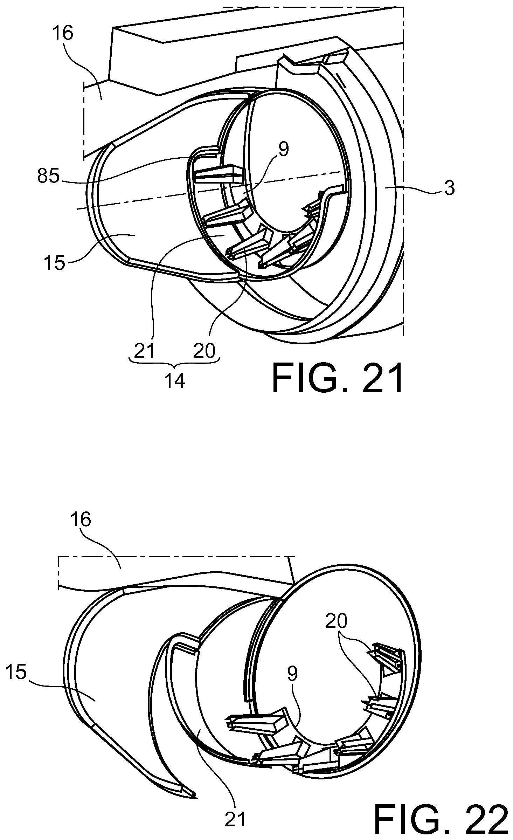

Les figures 21 et 22 montrent un autre type d'architecture des structures interne avant 14 et arrière 15 permettant aussi d'éviter une telle collision.

Dans le mode de réalisation de la figure 21, la structure interne arrière 15, dont une seule demi-partie est représentée en position fermée, ou position de vol, comprend une découpe 85 définissant, sur une portion longitudinale avant, un premier secteur circonférentiel fermé et ménageant une ouverture sur un deuxième secteur circonférentiel de cette portion longitudinale avant.

Les poutres 20 de la structure interne avant 14 sont placées circonférentiellement au sein de ce deuxième secteur circonférentiel de sorte que, lorsque un ou plusieurs panneaux 21 de la structure interne avant 14 sont supportés par les poutres 20 en configuration de fermeture, ce ou ces panneaux 21 ferment le deuxième secteur circonférentiel et forment ensemble, avec la partie de la structure interne arrière 15 s'étendant sur le premier secteur circonférentiel de la portion longitudinale avant, une structure sensiblement annulaire.

La géométrie de la découpe 85 et la dimension circonférentielle respective du premier et du deuxième secteur circonférentiel sont choisies de sorte que, lorsque la structure interne arrière 15 est placée en position de maintenance, le carter externe 3 s'étende en partie dans l'ouverture définie par la découpe 85. La dimension circonférentielle respective du premier et du deuxième secteur circonférentiel dépend donc typiquement de l'angle d'ouverture de chacune des demi-parties de la structure interne arrière 15.

Bien entendu, la demi-partie de la structure interne arrière 15 non représentée sur la figure 21 est symétrique à celle qui y est représentée.

Dans cet exemple, le ou les panneaux 21 coopèrent avec les poutres 20 et/ou avec le bâti 9 et/ou avec la structure interne arrière 15 selon les mêmes principes que ceux décrits ci-dessus en référence aux modes de réalisation des figures 3 à 20.

La figure 22 présente une variante qui se distingue du mode de réalisation de la figure 21 en ce que la structure interne avant 14 comprend un panneau 21 articulé sur la structure interne arrière 15 de sorte que, lorsque celle-ci est placée en configuration de maintenance, ce panneau 21 puisse être rabattu radialement vers l'intérieur selon la configuration illustrée sur la figure 22 de manière à éviter la collision ou l'interférence de ce panneau 21 avec le carter externe 3.

La dimension du panneau 21 relié à la structure interne arrière 15 peut couvrir uniquement une portion dudit deuxième secteur circonférentiel, une autre portion de ce deuxième secteur circonférentiel pouvant être couverte par un ou plusieurs autres panneaux 21 coopérant avec des poutres 20 et/ou avec la bâti 9 et/ou avec la structure interne arrière 15 selon les mêmes principes que ceux décrits ci-dessus en référence aux modes de réalisation des figures 3 à 21.

La description qui précède n'est aucunement limitative et les principes de l'invention peuvent être mis en œuvre et combinés de multiples manières sans sortir du cadre de l'invention tel que défini dans les revendications. Par exemple, l'ensemble propulsif 10 peut être dépourvu d'inverseur de poussée et comprendre une structure externe 12 fixe. Alternativement, l'ensemble propulsif 10 peut comprendre un inverseur de poussée à volets dont les bielles coopèrent non pas avec la structure interne avant 14 mais avec la structure interne arrière 15, par exemple dans le cadre d'une architecture de nacelle en « D ».

## Revendications

1. Nacelle pour ensemble propulsif (10) d'aéronef à double flux, cette nacelle comprenant une structure externe (12) et une structure interne arrière (15) s'étendant autour d'un axe central longitudinal (A1), ladite structure interne arrière (15) étant mobile entre :
- une position de vol dans laquelle elle délimite radialement vers l'intérieur une première portion longitudinale d'un canal annulaire (5) destiné à canaliser un flux secondaire au sein de l'ensemble propulsif (10) et dans laquelle elle couvre une première portion longitudinale d'un espace interne destiné à recevoir un moteur de l'ensemble propulsif (10), et
- une position de maintenance dans laquelle la structure interne arrière (15) est configurée pour découvrir au moins une partie de ladite première portion longitudinale de l'espace interne afin de permettre à un opérateur d'accéder à cet espace interne,
cette nacelle comprenant en outre une structure interne avant (14) comprenant des poutres (20) et un ou plusieurs panneaux (21), les poutres (20) s'étendant longitudinalement et étant espacées les unes des autres circonférentiellement par rapport à l'axe central longitudinal (A1), le ou les panneaux (21) pouvant être placés dans :
- une configuration de fermeture dans laquelle ils coopèrent avec les poutres (20) de manière à délimiter radialement vers l'intérieur une deuxième portion longitudinale du canal annulaire (5) et à couvrir une portion circonférentielle respective d'une deuxième portion longitudinale dudit espace interne,
- une configuration de maintenance dans laquelle ils libèrent un espace circonférentiel entre les poutres (20) afin de permettre à un opérateur d'accéder à ladite deuxième portion longitudinale de l'espace interne,
**caractérisée en ce que** ladite structure interne arrière (15) est réalisée en deux demi-parties symétriques par rapport à un plan longitudinal médian passant par ledit axe central longitudinal (A1) et passant par un mât (16) dudit ensemble propulsif (10), chacune desdites demi-parties de ladite structure interne arrière (15) comprenant une extrémité circonférentielle reliée au niveau dudit mât (16) dudit ensemble propulsif (10) selon une liaison pivot ménagée autour d'un axe de pivot respectif sensiblement parallèle audit axe central longitudinal (A1).

2. Nacelle selon la revendication 1, dans laquelle la structure interne avant (14) comprend une extrémité arrière configurée pour coopérer avec une extrémité avant de la structure interne arrière (15) lorsque la structure interne avant (14) est en configuration de fermeture et que la structure interne arrière (15) est en position de vol.

3. Nacelle selon la revendication 2, dans laquelle ladite extrémité arrière de la structure interne avant (14) est formée par une ou plusieurs desdites poutres (20).

4. Nacelle selon la revendication 2 ou 3, dans laquelle l'extrémité arrière de la structure interne avant (14) coopère avec l'extrémité avant de la structure interne arrière (15) de manière à transmettre des efforts axiaux de la structure interne arrière (15) vers la structure interne avant (14).

5. Nacelle selon l'une quelconque des revendications 1 à 4, dans laquelle les poutres (20) de la structure interne avant (14) sont configurées pour être reliées à un bâti (9) du moteur, de préférence par une extrémité avant de ces poutres (20).

6. Nacelle selon la revendication 5, comprenant des bielles de soutien (24), chaque bielle de soutien (24) étant reliée en une première extrémité à une partie intermédiaire ou une partie arrière de l'une respective des poutres (20) et étant configurée pour être reliée en une deuxième extrémité audit bâti (9) du moteur.

7. Nacelle selon l'une quelconque des revendications 1 à 6, dans laquelle au moins un desdits panneaux (21) est relié à une ou plusieurs desdites poutres (20) ou configuré pour être relié à un bâti (9) du moteur selon une liaison pivot autorisant son déplacement entre la configuration de fermeture et la configuration de maintenance.

8. Nacelle selon l'une quelconque des revendications 1 à 7, dans laquelle au moins un desdits panneaux (21) est relié à la structure interne arrière (15) selon une liaison pivot, la structure interne arrière (15) comprenant une partie avant pourvue d'une découpe de sorte que, lorsque la structure interne arrière (15) et en position de vol et que les panneaux (21) sont en configuration de fermeture, ladite partie avant de la structure interne arrière (15) forme un premier secteur circonférentiel et ledit au moins un panneau (21) relié à la structure interne arrière (15) forme un deuxième secteur circonférentiel, le premier et le deuxième secteur circonférentiel délimitant chacun radialement vers l'intérieur un secteur respectif de ladite deuxième portion longitudinale du canal annulaire (5).

9. Nacelle selon l'une quelconque des revendications 1 à 8, comprenant un inverseur de poussée (13) ayant des volets, la structure externe (12) étant mobile entre une position avancée et une position reculée, la nacelle comprenant des bielles (80) reliées en une première extrémité à l'une respective des poutres (20) de la structure interne avant (14) et en une deuxième extrémité à l'un respectif des volets de sorte que, lorsque la structure externe est déplacée de la position avancée vers la position reculée, les volets se déploient dans le canal annulaire (5).

10. Ensemble propulsif (10) d'aéronef à double flux, cet ensemble propulsif (10) comprenant un moteur et une nacelle selon l'une quelconque des revendications 1 à 9, le moteur comprenant un moyeu (2), un carter externe (3) et un ou plusieurs bras radiaux (4) reliant le moyeu (2) et le carter externe (3) l'un à l'autre, le carter externe (3) s'étendant longitudinalement en arrière par rapport à une partie avant de la structure interne avant (14) de sorte que ledit canal annulaire (5) soit, sur une partie de ladite deuxième portion longitudinale, délimité radialement vers l'intérieur par le ou les panneaux (21) de la structure interne avant (14) et radialement vers l'extérieur par le carter externe (3).

## Patentansprüche

1. Gondel für eine Zweikreis-Antriebsanordnung (10) eines Luftfahrzeugs, wobei diese Gondel eine Außenstruktur (12) und eine hintere Innenstruktur (15) umfasst, die sich um eine zentrale Längsachse (A1) herum erstrecken, wobei die hintere Innenstruktur (15) zwischen:
- einer Flugposition, in der sie einen ersten Längsabschnitt eines Ringkanals (5), der dazu bestimmt ist, den Sekundärstrom in der Antriebsanordnung (10) zu führen, radial nach innen begrenzt und in der sie einen ersten Längsabschnitt eines Innenraums bedeckt, der dazu bestimmt ist, einen Motor der Antriebsanordnung (10) aufzunehmen, und
- einer Wartungsposition, in der die hintere Innenstruktur (15) dazu eingerichtet ist, wenigstens einen Teil des genannten ersten Längsabschnitts des Innenraums freizulegen, um einem Bediener Zugang zu diesem Innenraum zu ermöglichen,
bewegbar ist,
wobei die Gondel ferner eine vordere Innenstruktur (14) umfasst, die Träger (20) und ein oder mehrere Paneele (21) umfasst, wobei sich die Träger (20) in Längsrichtung erstrecken und in Bezug auf die zentrale Längsachse (A1) in Umfangsrichtung voneinander beabstandet sind, wobei das Paneel oder die Paneele (21) in Folgendes bringbar sind:
- eine geschlossene Konfiguration, in der sie mit den Trägern (20) zusammenwirken, um einen zweiten Längsabschnitt des Ringkanals (5) radial nach innen zu begrenzen und um einen jeweiligen Umfangsabschnitt eines zweiten Längsabschnitts des genannten Innenraums abzudecken,
- eine Wartungskonfiguration, in der sie einen Umfangsraum zwischen den Trägern (20) freigeben, um einem Bediener Zugang zu dem genannten zweiten Längsabschnitt des Innenraums zu ermöglichen,
**dadurch gekennzeichnet, dass** die hintere Innenstruktur (15) in zwei Halbteile ausgeführt ist, die bezüglich einer Längsmittelebene symmetrisch sind, die durch die zentrale Längsachse (A1) und durch einen Mast (16) der Antriebsanordnung (10) verläuft, wobei jedes der Halbteile der hinteren Innenstruktur (15) ein Umfangsende aufweist, das an dem Mast (16) der Antriebsanordnung (10) in einer Schwenkverbindung um eine jeweilige Schwenkachse angebunden ist, die im Wesentlichen parallel zu der zentralen Längsachse (A1) ist.

2. Gondel nach Anspruch 1, wobei die vordere Innenstruktur (14) ein hinteres Ende umfasst, das dazu eingerichtet ist, mit einem vorderen Ende der hinteren Innenstruktur (15) zusammenzuwirken, wenn sich die vordere Innenstruktur (14) in einer geschlossenen Konfiguration befindet und sich die hintere Innenstruktur (15) in einer Flugposition befindet.

3. Gondel nach Anspruch 2, wobei das hintere Ende der vorderen Innenstruktur (14) durch einen oder mehrere der Träger (20) gebildet ist.

4. Gondel nach Anspruch 2 oder 3, wobei das hintere Ende der vorderen Innenstruktur (14) mit dem vorderen Ende der hinteren Innenstruktur (15) derart zusammenwirkt, dass axiale Kräfte von der hinteren Innenstruktur (15) auf die vordere Innenstruktur (14) übertragen werden.

5. Gondel nach einem der Ansprüche 1 bis 4, wobei die Träger (20) der vorderen Innenstruktur (14) dazu eingerichtet sind, mit einem Gestell (9) des Motors verbunden zu werden, vorzugsweise über ein vorderes Ende dieser Träger (20).

6. Gondel nach Anspruch 5, umfassend Stützstreben (24), wobei jede Stützstrebe (24) an einem ersten Ende mit einem Zwischenabschnitt oder einem hinteren Abschnitt eines jeweiligen der Träger (20) verbunden ist und dazu eingerichtet ist, an einem zweiten Ende mit dem Gestell (9) des Motors verbunden zu werden.

7. Gondel nach einem der Ansprüche 1 bis 6, wobei mindestens eines der Paneele (21) mit einem oder mehreren der Träger (20) verbunden ist oder dazu eingerichtet ist, mit einem Gestell (9) des Motors über eine Schwenkverbindung verbunden zu werden, die eine Bewegung desselben zwischen der geschlossenen Konfiguration und der Wartungskonfiguration erlaubt.

8. Gondel nach einem der Ansprüche 1 bis 7, wobei mindestens eines der Paneele (21) mit der hinteren Innenstruktur (15) in einer Schwenkverbindung verbunden ist, wobei die hintere Innenstruktur (15) einen vorderen Teil aufweist, der mit einem Ausschnitt versehen ist, sodass, wenn sich die hintere Innenstruktur (15) in einer Flugposition befindet und sich die Paneele (21) in einer geschlossenen Position befinden, der vordere Teil der hinteren Innenstruktur (15) einen ersten Umfangssektor bildet und das mindestens eine mit der hinteren Innenstruktur (15) verbundene Paneel (21) einen zweiten Umfangssektor bildet, wobei der erste und der zweite Umfangssektor jeweils einen jeweiligen Sektor des genannten zweiten Längsabschnitts des Ringkanals (5) radial nach innen begrenzen.

9. Gondel nach einem der Ansprüche 1 bis 8, umfassend einen Schubumkehrer (13) mit Klappen, wobei die Außenstruktur (12) zwischen einer vorgeschobenen Position und einer zurückgezogenen Position bewegbar ist, wobei die Gondel Koppelstangen (80) umfasst, die an einem ersten Ende mit einem jeweiligen der Träger (20) der vorderen Innenstruktur (14) und an einem zweiten Ende mit einer jeweiligen der Klappen verbunden sind, so dass, wenn die Außenstruktur von der vorgeschobenen Position in die zurückgezogene Position bewegt wird, die Klappen in den Ringkanal (5) ausfahren.

10. Zweikreis-Antriebsanordnung (10) für ein Luftfahrzeug, wobei diese Antriebsanordnung (10) einen Motor und eine Gondel nach einem der Ansprüche 1 bis 9 umfasst, wobei der Motor eine Nabe (2), ein Außengehäuse (3) und einen oder mehrere Radialarme (4) umfasst, die die Nabe (2) und das Außengehäuse (3) miteinander verbinden, wobei sich das Außengehäuse (3) relativ zu einem vorderen Teil der vorderen Innenstruktur (14) in Längsrichtung nach hinten erstreckt, so dass der Ringkanal (5) über einen Teil des genannten zweiten Längsabschnitts radial nach innen durch das Paneel oder die Paneele (21) der vorderen Innenstruktur (14) und radial nach außen durch das Außengehäuse (3) begrenzt ist.

## Claims

1. Nacelle for an aircraft bypass propulsion assembly (10), this nacelle comprising an external structure (12) and a rear internal structure (15) extending around a longitudinal central axis (A1), the rear internal structure (15) being able to move between:
- a flight position wherein it delimits radially inwards a first longitudinal portion of an annular channel (5) intended to channel the secondary flow in the propulsion assembly (10) and wherein it covers a first longitudinal portion of an internal space intended to receive an engine of the propulsion assembly (10), and
- a maintenance position wherein the rear internal structure (15) is configured for uncovering at least a part of said first longitudinal portion of the internal space in order to enable an operator to access this internal space,
this nacelle further comprising a front internal structure (14) comprising beams (20) and one or more panels (21), the beams (20) extending longitudinally and being spaced apart from each other circumferentially with respect to the longitudinal central axis (A1), the panel or panels (21) being able to be placed in:
- a closed configuration wherein they cooperate with the beams (20) so as to delimit radially inwards a second longitudinal portion of the annular channel (5) and so as to cover a respective circumferential portion of a second longitudinal portion of said internal space,
- a maintenance configuration wherein they leave clear a circumferential space between the beams (20) in order to enable an operator to access said second longitudinal portion of the internal space,
**characterized in that** said rear internal structure (15) is realised in two half-parts symmetrical with respect to a longitudinal mid-plane passing through said longitudinal central axis (A1) and passing through a mast (16) of said propulsion assembly (10), each of said half-parts of said rear internal structure (15) comprises a circumferential end connected at said mast (16) of said propulsion assembly (10) in a pivot connection about a respective pivot axis substantially parallel to said longitudinal central axis (A1).

2. Nacelle according to claim 1, wherein the front internal structure (14) comprises a rear end configured for cooperating with a front end of the rear internal structure (15) when the front internal structure (14) is in a closed configuration and the rear internal structure (15) is in a flight position.

3. Nacelle according to claim 2, wherein said rear end of the front internal structure (14) is formed by one or more of said beams (20).

4. Nacelle according to claim 2 or 3, wherein the rear end of the front internal structure (14) cooperates with the front end of the rear internal structure (15) so as to transmit axial forces from the rear internal structure (15) to the front internal structure (14).

5. Nacelle according to any one of claims 1 to 4, wherein the beams (20) of the front internal structure (14) are configured for being connected to a frame (9) of the engine, preferably by a front end of these beams (20).

6. Nacelle according to claim 5, comprising support linkages (24), each support linkage (24) being connected at a first end to an intermediate part or a rear part of a respective one of the beams (20) and being configured for being connected at a second end to said frame (9) of the engine.

7. Nacelle according to any one of claims 1 to 6, wherein at least one of said panels (21) is connected to one or more of said beams (20) or configured for being connected to a frame (9) of the engine in a pivot connection allowing movement thereof between the closed configuration and the maintenance configuration.

8. Nacelle according to any one of claims 1 to 7, wherein at least one of said panels (21) is connected to the rear internal structure (15) in a pivot connection, the rear internal structure (15) comprising a front part provided with a cutout so that, when the rear internal structure (15) is in a flight position and the panels (21) are in a closed position, said front part of the rear internal structure (15) forms a first circumferential sector and said at least one panel (21) connected to the rear internal structure (15) forms a second circumferential sector, the first and the second circumferential sector each delimiting radially inwards a respective sector of said second longitudinal portion of the annular channel (5).

9. Nacelle according to any one of claims 1 to 8, comprising a thrust reverser (13) having flaps, the external structure (12) being able to move between an advanced position and a retracted position, the nacelle comprising linkages (80) connected at a first end to a respective one of the beams (20) of the front internal structure (14) and at a second end to a respective one of the flaps so that, when the external structure is moved from the advanced position to the retracted position, the flaps deploy in the annular channel (5).

10. Aircraft bypass propulsion assembly (10), this propulsion assembly (10) comprising an engine and a nacelle according to any one of claims 1 to 9, the engine comprising a hub (2), an external casing (3) and one or more radial arms (4) connecting the hub (2) and the external casing (3) to each other, the external casing (3) extending longitudinally at the rear with respect to a front part of the front internal structure (14) so that said annular channel (5) is, over a part of said second longitudinal portion, delimited radially inwards by the panel or panels (21) of the front internal structure (14) and radially outwards by the external casing (3).
